# EUROPÄISCHE PATENTSCHRIFT

(11) **EP 1 977 084 B1**
(45) Veröffentlichungstag und Bekanntmachung des Hinweises auf die Patenterteilung: **12.08.2009**
(21) Anmeldenummer: 07700101.4
(22) Anmeldetag: 03.01.2007
(51) Int. Cl.: F01D 17/16

(54) **VERSTELLBARE LEITVORRICHTUNG**
ADJUSTABLE GUIDING DEVICE
DISPOSITIF DE DIRECTION POUVANT ETRE DEPLACE

(30) Priorität: 23.01.2006 EP 06405029
(43) Veröffentlichungstag der Anmeldung: 08.10.2008
(73) Patentinhaber: ABB Turbo Systems AG, 5400 Baden (CH)
(72) Erfinder: BÄTTIG, Josef, CH-5704 Egliswil (CH)
(74) Vertreter: Zimmermann, Gilbert
(86) Internationale Anmeldenummer: PCT/CH2007/000001
(87) Internationale Veröffentlichungsnummer: WO 2007/082397

(56) Entgegenhaltungen:
- EP-A- 1 396 621
- DE-A1- 10 313 167
- US-A- 4 741 666
- US-A1- 2004 261 413
- US-B1- 6 312 217

## Beschreibung

### Technisches Gebiet

Die Erfindung bezieht sich auf das Gebiet der mit Abgasen von Brennkraftmaschinen beaufschlagten Strömungsmaschinen.

Sie betrifft eine Vorrichtung zum Übertragen einer Verstellkraft von einem Verstellring auf einen Schaufelschaft einer drehbar gelagerten Leitschaufel einer verstellbaren Leitvorrichtung der Abgasturbine oder des Verdichters eines Abgasturboladers, eine Leitvorrichtung mit einer solchen Übertragungsvorrichtung, einen Verdichter und eine Abgasturbine mit einer solchen Leitvorrichtung sowie einen Abgasturbolader mit einem solchen Verdichter und/ oder mit einer solchen Abgasturbine.

### Stand der Technik

Abgasturbolader werden zur Leistungssteigerung von Brennkraftmaschinen eingesetzt. Bei modernen Brennkraftmaschinen wird die Anpassung der Abgasturbolader an variable Betriebsbedingungen zunehmen schwieriger. Eine weit verbreitete Möglichkeit dazu bietet die so genannte variable Turbinen- und/oder Verdichtergeometrie. Bei der variablen Turbinengeometrie werden die Leitschaufeln des Leitapparates stromauf des Turbinenrades entsprechend dem Leistungsbedarf der Turbine mehr oder weniger steil zur Strömung ausgerichtet. Bei der variablen Verdichtergeometrie werden die Diffusorschaufeln stromab des Verdichterrades mehr oder weniger steil zur Strömung ausgerichtet. Die Verstellung der Schaufel erfolgt in der Regel über so genannte Verstellhebel, welche von einem konzentrisch zur Achse des Abgasturboladers angeordneten Verstellring bewegt werden. Bei Radialturbinen, bzw. Radialverdichtern steht die Leitschaufel bzw. die Diffusorschaufel in der Regel parallel zur Wellenachse. Der Schaft der Leit- bzw. Diffusorschaufel wird in einem Gehäuse vorzugsweise 2-fach gelagert und mittels eines Verstellhebels, welcher zwischen den beiden Lagerstellen am Schaufelschaft angreift, verdreht. Falls der Verstellhebel unmittelbar mittels Aussparungen im Verstellring bewegt werden soll, muss dessen Ende wie beispielsweise in EP 1 520 959 dargestellt, zylinderförmig ausgebildet werden, damit dieser nicht in der Nut verklemmt.

Auch wenn der Verstellring mit Nocken versehen ist, welche in korrespondierende Nuten der Verstellhebel eingreifen, müssen diese Nocken zylindrisch, beispielsweise als eingesetzte Mitnehmerbolzen, ausgeführt werden, wie dies EP 1 234 951 zeigt.

Zum Verstellen der Leitschaufel wird der Verstellring konzentrisch um die Turboladerachse verdreht wodurch die Leitschaufeln mittels der Verstellhebel geschwenkt werden.

Bedingt durch diese Dreh- und Schwenk-Bewegung verschiebt sich der Zylinder des Verstellhebels oder des Nutringes auf der Nutoberfläche des Nutringes resp. des Verstellhebels. Aufgrund der linienförmigen Auflage des Zylinders in den Nuten des Verstellhebels resp. Nutringes entstehen trotz bescheidenen Normalkräften sehr hohe Hertz'sche Pressungen. Bedingt durch die Relativbewegungen des Zylinders auf der Nutoberfläche sowie den hohen Flächenpressungen verschleissen die Gleitpartner im Betrieb.

US 4,741,666 offenbart eine Vorrichtung zum Übertragen einer Verstellkraft von einem Verstellring auf einen Schaufelschaft einer drehbar gelagerten Leitschaufel mit den im oberbegriff der Anspruchs 1 zusammenpefaßten Merkenalen, nämlich mit einem Verstellhebel sowie einer mit einem Verstellung verbindbaren Mitnehmerhülse, welche drehbar auf einem Stift gelagert ist. Die Mitnehmerhülse und eine Nut des Verstellhebels weisen jeweils paarweise aufeinander abgestimmte Kontaktflächen auf.

### Kurze Darstellung der Erfindung

Die Aufgabe der vorliegenden Erfindung besteht darin, eine über eine lange Betriebszeit zuverlässig funktionierende Leitvorrichtung mit verstellbaren Leitschaufeln zu schaffen, welche zudem einfach zu montieren/ demontieren ist.

Erfindungsgemäss wird die Leitvorrichtung mit verstellbaren Leitschaufeln mit einem Antrieb für die verstellbaren Leitschaufeln versehen, bei welchem ein zylindrisch ausgebildeter Mitnehmerbolzen und ein Verstellhebel mit je einem aufeinander abgestimmten Flächenpaar ausgestattet sind, welche im Betrieb beim Verstellen der Leitschaufeln aufeinander gleiten. Die Mitnehmerbolzen sind hierfür mit Ausnehmung in der Manteloberfläche versehen. Zum Verstellen der Leitschaufel wird der Verstellring bewegt, wodurch der am Verstellring befestigte Mitnehmerbolzen in einer länglichen Nut des Verstellhebels entlanggleitet und eine Kraft auf den Verstellhebel ausübt.

Durch diese Lösung entsteht eine kostengünstige und robuste Konstruktion. Der zylinderförmige Mitnehmerbolzen ist einerseits beidseitig im Verstellring gelagert ist und zudem axial formschlüssig in der Nut des Vertellhebels fixiert. Es resultiert eine Flächen-Auflage mit entsprechend niedrigen Flächen-Pressungen und folglich massiv reduziertem Verschleiss. Der Verstellring kann sowohl radial innerhalb als auch ausserhalb der Leitschaufeln angeordnet sein.

Der Mitnehmerbolzen lässt sich auf einfache Weise sehr kostengünstig herstellen und ist zudem nach der Montage verliersicher mit dem Verstellring bzw. mit dem Verstellhebel verbunden. Die Ausnehmungen in der Manteloberfläche ermöglichen das axiale Durchschieben des Mitnehmerbolzens durch die Lagerbohrungen und das anschliessende axiale Fixieren mittels des Verstellhebels. Somit ist zur axialen Sicherung kein zusätzliches Bauteil notwendig.

Der Verstellring weist in einer Ausführungsform einen U-förmigen Querschnitt mit einer Nut sowie eine der Anzahl Leitschaufeln entsprechenden Anzahl Bohrungen zur Aufnahme der Mitnehmerbolzen auf.

Die Verstellhebel sind radial angeordnet und weisen an ihrem Ende vorteilhafterweise konzentrisch zum Schaufelschaft angeordnete Kreissegmente auf, welche mit dem Nutgrund des Verstellringes korrespondieren und so für dessen Radiallagerung sorgen.

### Kurze Beschreibung der Zeichnungen

Nachfolgend werden verschiedene Ausführungsformen der Erfindung anhand von Zeichnungen detailliert erläutert. Hierbei zeigt
- Fig. 1: einen entlang der Achse geführten Schnitt durch eine Radialturbine mit einer erfindungsgemäss ausgebildeten, verstellbaren Leitvorrichtung,
- Fig. 2: einen Schnitt senkrecht zur Achse durch die verstellbare Leitvorrichtung der Radialturbine nach Fig.1,
- Fig. 3: einen entlang der Achse geführten Schnitt durch einen Radialverdichter mit einer erfindungsgemäss ausgebildeten, verstellbaren Leitvorrichtung,
- Fig. 4: einen Schnitt senkrecht zur Achse durch die verstellbare Leitvorrichtung des Radialverdichters nach Fig. 3,
- Fig. 5: eine isometrische Detaildarstellung einer erfindungsgemäss ausgebildeten Leitvorrichtung mit einem Verstellhebel und einem Mitnehmerbolzen, und
- Fig. 6: drei verschiedene Ausführungsformen des Mitnehmerbolzens nach Fig. 5.

### Weg zur Ausführung der Erfindung

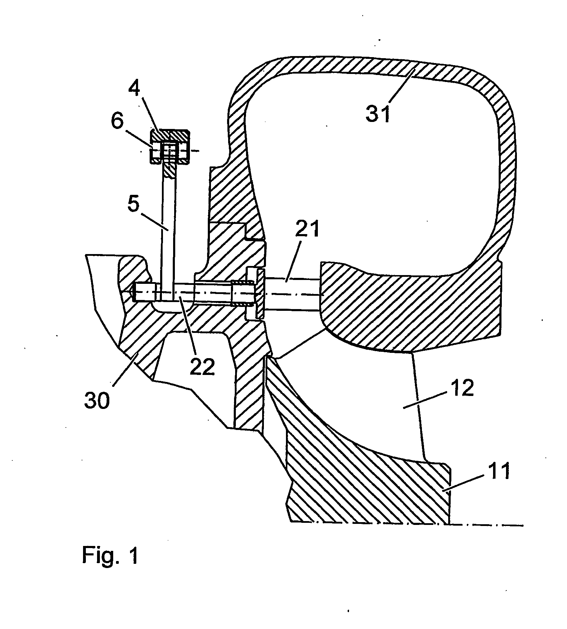

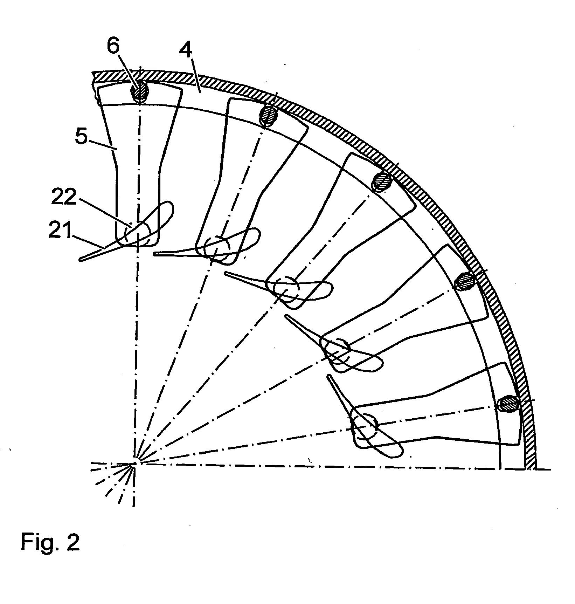

Fig. 1 und Fig. 2 zeigen eine Abgasturbine, wie sie beispielsweise in Abgasturboladern eingesetzt wird, mit einer erfindungsgemäss ausgebildeten verstellbaren Leitvorrichtung.

Die dargestellte Radialturbine umfasst ein Turbinenrad, welches auf einer in einem Lagergehäuse 30 drehbar gelagerten Welle angeordnet ist. Das Turbinenrad weist eine Nabe 11 mit einer Vielzahl von Laufschaufeln 12 auf. Die Turbinenrad-Nabe begrenzt zusammen mit dem Turbinengehäuse 31 einen Strömungskanal. In Strömungsrichtung stromauf des Turbinenrades ist der Strömungskanal durch das Lagergehäuse 30 und das Turbinengehäuse 31 begrenzt. In diesem Bereich ist eine verstellbare Leitvorrichtung angeordnet.

Die Leitvorrichtung umfasst mehrere verstellbare Leitschaufeln 21, welche jeweils um einen drehbar gelagerten Schaufelschaft 22 rotierbar sind. Leitschaufel und Schaufelschaft können form-, kraft- oder stoffschlüssig miteinander verbunden sein.

Der Schaufelschaft 22 ist in dem Lagergehäuse 30 drehbar gelagert. Zum Antrieb des Schaufelschaftes ist ein mit dem Schaufelschaft verbundener Verstellhebel 5 vorgesehen, welcher Kraft von einem bezüglich der Turbinenachse radial ausserhalb des Schaufelschaftes angeordneten Verstellring 4 auf den Schaufelschaft überträgt. Der Verstellhebel ist form-, kraft- oder stoffschlüssig mit dem Schaufelschaft verbunden.

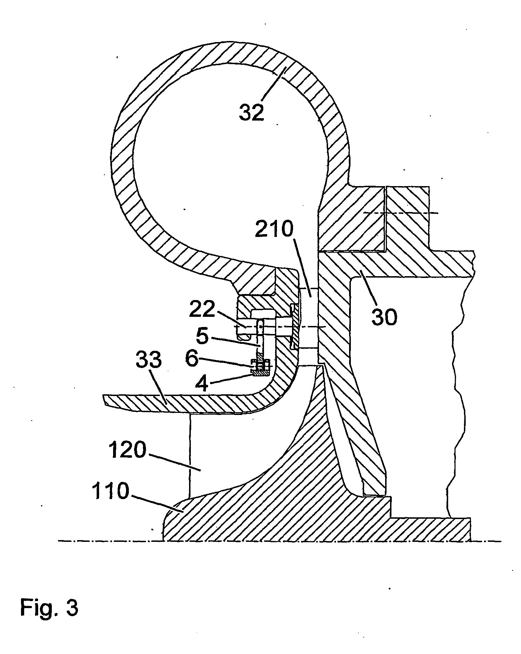

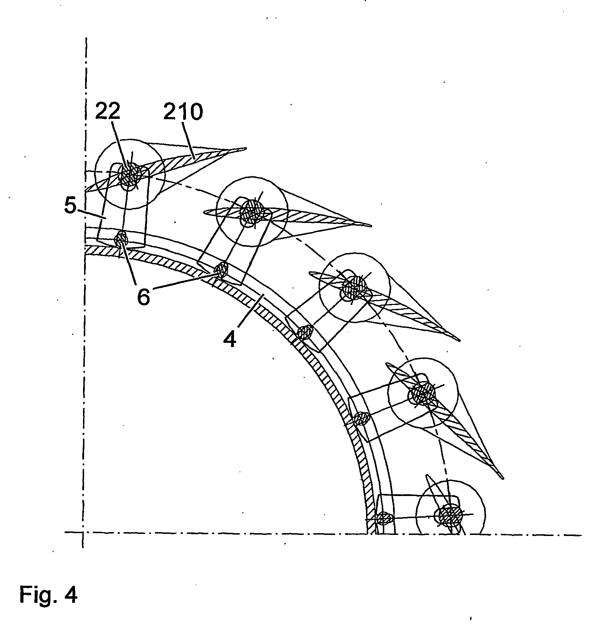

Fig. 3 und Fig. 4 zeigen einen Verdichter, wie er beispielsweise in Abgasturboladern eingesetzt wird, mit einer erfindungsgemässen Leitvorrichtung.

Der dargestellte Radialverdichter umfasst ein Verdichterrad, welches auf einer in einem Lagergehäuse 30 drehbar gelagerten Welle angeordnet ist. Das Verdichterrad weist eine Nabe 110 mit einer Vielzahl von Laufschaufeln 120 auf. Die Verdichterrad-Nabe begrenzt zusammen mit einer Einsatzwand 33 einen Strömungskanal. In Strömungsrichtung stromab des Verdichterrades ist der Strömungskanal durch das Lagergehäuse und das Verdichteraustrittsgehäuse 32 begrenzt. Im Bereich des Diffusors, stromab des Verdichterrades, ist eine verstellbare Diffusor-Leitvorrichtung angeordnet.

Diese Leitvorrichtung umfasst eine Vielzahl verstellbarer Leitschaufeln 210, welche jeweils um einen drehbar gelagerten Schaufelschaft 22 rotierbar sind. Leitschaufel und Schaufelschaft können form-, kraft- oder stoffschlüssig miteinander verbunden sein.

Der Schaufelschaft ist in dem Gehäuse drehbar gelagert. Zum Antrieb des Schaufelschaftes ist ein Verstellhebel 5 vorgesehen, welcher Kraft von einem bezüglich der Verdichterachse radial innerhalb des Schaufelschaftes angeordneten Verstellring 4 auf den Schaufelschaft überträgt. Der Verstellhebel ist form-, kraft- oder stoffschlüssig mit dem Schaufelschaft verbunden.

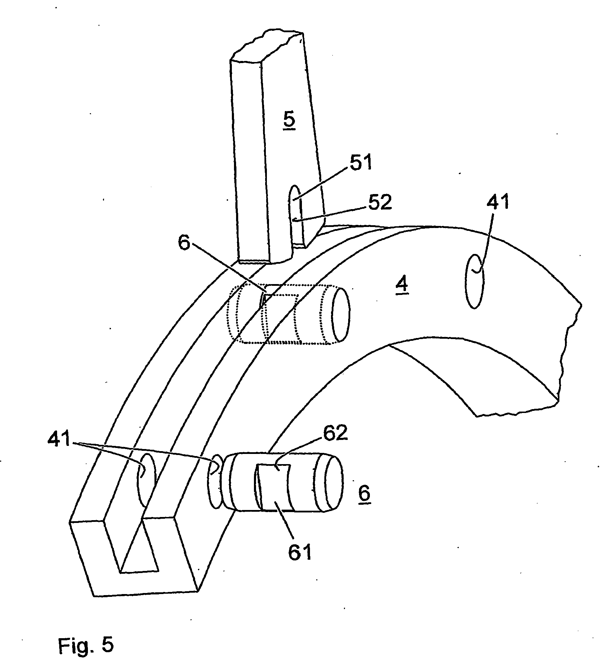

In beiden Ausführungsformen, bei innen- oder aussenliegendem Verstellring, ist in das freie Ende des Verstellhebels 5, wie dies in der Fig. 5 dargestellt ist, eine längliche Nut 51 eingelassen. In der länglichen Nut wird ein Mitnehmerbolzen 6 aufgenommen, welcher sich mit dem Verstellring auf einem konzentrisch zur Wellenachse verlaufenden Kreisbogenabschnitt bewegt. Die längliche Nut kann auch als Langloch ausgebildet sein, in welchem sich der Mitnehmerbolzen hin und her bewegen kann, welches aber verhindert, dass der Mitnehmerbolzen gänzlich aus der Nut gezogen wird.

Mitnehmerbolzen 6 und die längliche Nut 51 weisen erfindungsgemäss jeweils zwei parallele Kontaktflächen auf. Die beiden Kontaktflächen 62 des zylindrisch ausgebildeten Mitnehmerbolzens 6 sind durch gegenüberliegende, in die Mantelflächen eingelassene Ausnehmungen 61 geformt und zueinander parallel angeordnet. Die beiden Kontaktflächen 52 der länglichen Nut im Verstellhebel 5 sind ebenfalls zueinander parallel angeordneten. Die Abstände der beiden Kontaktflächen-Paare sind so gewählt, dass der Mitnehmerbolzen im Bereich der beiden Ausnehmungen 61 in die Nut 51 des Verstellhebels eingeführt werden kann und beidseitig mit den Oberflächen der Nut im Kontakt steht. Einerseits sollte der Mitnehmerbolzen mit den beiden Kontaktflächen 62 möglichst reibungslos den Kontaktflächen 52 der Nut entlanggleiten. Andererseits sollte der Mitnehmerbolzen sich bezüglich dem Verstellhebel senkrecht zu den Kontaktflächen nicht bewegen können, damit der Verstellhebel im Betrieb nicht um den Mitnehmerbolzen vibriert.

Der Mitnehmerbolzen ist zweifach in dem Verstellring 4 gelagert. Bei der dargestellten zweifachen Lagerung ist der Verstellring U-förmig ausgebildet und der Verstellhebel verläuft in der Mitte des U-förmigen Profils. Der Mitnehmerbolzen weist eine mittige doppelseitige Ausnehmung auf, über welche der Verstellring verschiebbar ist. Der Mitnehmerbolzen ist in axialer Richtung gesichert, indem die Seitenwände der beiden Ausnehmungen 61 bündig am Verstellhebel 5 anliegen. Dadurch erleichtert sich die Montage der Verstellvorrichtung. Die Mitnehmerbolzen werden axial in die Bohrungen 41 im Verstellring 4 eingeführt, wie unten in Fig. 5 angedeutet, und anschliessend werden die Verstellhebel 5 aus Sicht des Mitnehmerbolzens in radialer Richtung in die doppelseitigen Ausnehmungen eingeschoben. Es ist keine weitere axiale Sicherung des Mitnehmerbolzens notwendig.

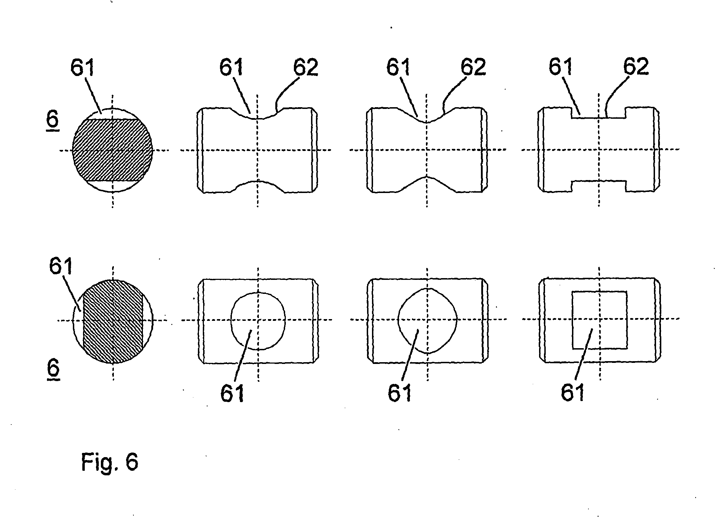

Gemäss der Darstellung in der Fig. 6 können die Ausnehmungen 61 in den Mitnehmerbolzen unterschiedlich ausgeführt sein. Von links nach rechts sind drei Mitnehmerbolzen dargestellt, mit jeweils zwei abgerundeten Ausnehmungen (Links), zwei zu einem Spitz verlaufenden, V-förmigen Ausnehmungen (Mitte) sowie zwei rechteckigen Ausnehmung (Rechts). Ein Mitnehmerbolzen kann auch zwei unterschiedlich ausgebildete Ausnehmungen aufweisen, beispielsweise auf der einen Seite eine rechteckige und auf der anderen Seite eine abgerundete. Auf diese Weise kann die Ausrichtung des Mitnehmerbolzens bezüglich des Verstellhebels definiert werden. Die Oberflächen der Nut des Verstellhebels sind der jeweiligen Ausnehmungen der Mitnehmerbolzen entsprechend geformt.

Zur Verbesserung der Gleiteigenschaft des Mitnehmerbolzens in der Nut des Verstellrings, können die Kontaktflächen des Mitnehmerbolzens und/ oder des Verstellhebels speziell gehärtet oder mit einem Gleithilfsmittel beschichtet sein.

Die erfindungsgemässen Leitvorrichtungen können sowohl in Verdichter und/ oder Turbine eines Abgasturboladers zur Aufladung von Zwei- oder Viertakt-Verbrennungsmotoren eingesetzt werden, als auch in Turbinen bei mit Abgasen einer Brennkraftmaschine betriebenen Nutzturbinen.

### Bezugszeichenliste

- 11: Turbinenrad-Nabe
- 110: Verdichterrad-Nabe
- 12: Turbinen-Laufschaufeln
- 120: Verdichter-Laufschaufeln
- 21: Leitschaufel
- 210: Diffusorschaufel
- 22: Schaufelschaft
- 30: Lagergehäuse
- 31: Turbinengehäuse
- 32: Verdichtergehäuse
- 33: Einsatzwand
- 4: Verstellring
- 41: Bohrungen
- 5: Verstellhebel
- 51: Nut
- 52: Kontaktfläche
- 6: Mitnehmerbolzen
- 61: Ausnehmung
- 62: Kontaktfläche

## Patentansprüche

1. Vorrichtung zum Übertragen einer Verstellkraft von einem Verstellring (4) auf einen Schaufelschaft (22) einer drehbar gelagerten Leitschaufel (21, 210) einer verstellbaren Leitvorrichtung, mit einem Verstellhebel (5) sowie einem mit einem Verstellring verbindbaren Mitnehmerbolzen (6), wobei der Verstellhebel an einem Ende mit einem Schaufelschaft (22) einer drehbar gelagerten Leitschaufel (21, 210) einer verstellbaren Leitvorrichtung verbindbar ist, und in das andere Ende des Verstellhebels eine langförmige Nut (51) zum Aufnehmen des Mitnehmerbolzens (6) eingelassen ist, wobei der Mitnehmerbolzen (6) und die Nut (51) je zwei Kontaktflächen (52, 62) aufweisen, und die Kontaktflächen (62) des Mitnehmerbolzens und die Kontaktflächen (52) der Nut jeweils paarweise aufeinander abgestimmt sind, **dadurch gekennzeichnet, dass** der Mitnehmerbolzen (6) eine zylindrische Form aufweist, und dass die Kontaktflächen (62) der Mitnehmerbalzens durch Ausnehmungen (61) in der Mantelfläche des Mitnehmerbolzens gebildet sind.

2. Vorrichtung nach Anspruch 1, **dadurch gekennzeichnet, dass** die Ausnehmungen (62) in der Mantelfläche des Mitnehmerbolzens ein rechteckiges oder ein abgerundetes oder ein V-förmiges Profil aufweisen.

3. Vorrichtung nach Anspruch 1, **dadurch gekennzeichnet, dass** die beiden Ausnehmungen (62) in der Mantelfläche des Mitnehmerbolzens unterschiedliche Profile aufweisen.

4. Vorrichtung nach einem der Ansprüche 1 bis 3, **dadurch gekennzeichnet, dass** die Kontaktflächen (52) der Nut und/ oder die Kontaktflächen (62) des Mitnehmerbolzenes gehärtet oder mit einem Gleithilfsmittel beschichtet sind.

5. Leitvorrichtung mit verstellbaren Leitschaufeln (21, 210), welche Leitschaufeln jeweils mit einem drehbar gelagerten Schaufelschaft (22) verbunden und mit einem mit dem Schaufelschaft verbundenen und auf den Schaufelschaft wirkenden und über einen Verstellring (4) angetriebenen Verstellhebel (23) um den Schaufelschaft drehbar sind, **dadurch gekennzeichnet, dass** die Leitvorrichtung zur Übertragung einer Verstellkraft vom Verstellring (4) auf den Schaufelschaft (22) eine Vorrichtung nach einem der Ansprüche 1 bis 4 umfasst.

6. Leitvorrichtung nach Anspruch 5, **dadurch gekennzeichnet, dass** der Mitnehmerbolzen (6) in Bohrungen (41) des Verstellrings (4) drehbar gelagert ist.

7. Verdichter mit einen Diffusor mit verstellbaren Diffusorschaufeln, **dadurch gekennzeichnet, dass** der Diffusor eine Leitvorrichtung nach einem der Ansprüche 5 oder 6 umfasst.

8. Abgasturbine, **gekennzeichnet durch** eine Leitvorrichtung nach einem der Ansprüche 5 oder 6.

9. Abgasturbolader, **gekennzeichnet durch** einen Verdichter nach Anspruch 7 und/ oder **durch** eine Abgasturbine nach Anspruch 8.

## Claims

1. Device for transmitting an adjusting force from an adjusting ring (4) to a blade shank (22) of a rotatably mounted guide blade (21, 210) of an adjustable guide device, with an adjusting lever (5) and with a driver bolt (6) connectable to an adjusting ring, the adjusting lever being connectable at one end to a blade shank (22) of a rotatably mounted guide blade (21, 210) of an adjustable guide device, and an elongate groove (51) for receiving the driver bolt (6) being introduced into the other end of the adjusting lever, the driver bolt (6) and the groove (51) each having two contact faces (52, 62), and the contact faces (62) of the driver bolt and the contact faces (52) of the groove being in each case co-ordinated with one another in pairs, **characterized in that** the driver bolt (6) has a cylindrical shape, and **in that** the contact faces (62) of the driver bolt are formed by recesses (61) in the surface area of the driver bolt.

2. Device according to Claim 1, **characterized in that** the recesses (62) in the surface area of the driver bolt have a rectangular or a rounded or a V-shaped profile.

3. Device according to Claim 1, **characterized in that** the two recesses (62) in the surface area of the driver bolt have different profiles.

4. Device according to one of Claims 1 to 3, **characterized in that** the contact faces (52) of the groove and/or the contact faces (62) of the driver bolt are hardened or are coated with a sliding aid.

5. Guide device with adjustable guide blades (21, 210), which guide blades are in each case connected to a rotatably mounted blade shank (22) and are rotatable about the blade shank by means of an adjusting lever (23) which is connected to the blade shank and acts on the blade shank and which is driven via an adjusting ring (4), **characterized in that** the guide device comprises a device according to one of Claims 1 to 4 for transmitting an adjusting force from the adjusting ring (4) to the blade shank (22).

6. Guide device according to Claim 5, **characterized in that** the driver bolt (6) is mounted rotatably in bores (41) of the adjusting ring (4).

7. Compressor with a diffuser having adjustable diffuser blades, **characterized in that** the diffuser comprises a guide device according to either one of Claims 5 and 6.

8. Exhaust gas turbine, **characterized by** a guide device according to either one of Claims 5 and 6.

9. Exhaust gas turbocharger, **characterized by** a compressor according to Claim 7 and/or by an exhaust gas turbine according to Claim 8.

## Revendications

1. Dispositif de transfert d'une force de réglage d'une bague de réglage (4) à un arbre d'aube (22) d'une aube directrice montée à rotation (21, 210) d'un dispositif directeur réglable, comprenant un levier de réglage (5) ainsi qu'un boulon d'entraînement (6) pouvant être connecté à une bague de réglage, le levier de réglage pouvant être connecté par une extrémité à un arbre d'aube (22) d'une aube directrice montée à rotation (21, 210) d'un dispositif directeur réglable, et dans l'autre extrémité du levier de réglage étant pratiquée une rainure allongée (51) pour recevoir le boulon d'entraînement (6), le boulon d'entraînement (6) et la rainure (51) présentant chacun deux surfaces de contact (52, 62), et les surfaces de contact (62) du boulon d'entraînement et les surfaces de contact (52) de la rainure étant à chaque fois adaptées mutuellement par paire, **caractérisé en ce que** le boulon d'entraînement (6) présente une forme cylindrique et **en ce que** les surfaces de contact (62) du boulon d'entraînement sont formées par des évidements (61) dans la surface d'enveloppe du boulon d'entraînement.

2. Dispositif selon la revendication 1, **caractérisé en ce que** les évidements (62) dans la surface d'enveloppe du boulon d'entraînement présentent un profilé rectangulaire ou un profilé arrondi ou en forme de V.

3. Dispositif selon la revendication 1, **caractérisé en ce que** les deux évidements (62) dans la surface d'enveloppe du boulon d'entraînement présentent des profilés différents.

4. Dispositif selon l'une quelconque des revendications 1 à 3, **caractérisé en ce que** les surfaces de contact (52) de la rainure et/ou les surfaces de contact (62) du boulon d'entraînement sont durcies ou sont revêtues d'un auxiliaire de glissement.

5. Dispositif directeur avec des aubes directrices réglables (21, 210), lesquelles aubes directrices sont chacune connectées à un arbre d'aube monté à rotation (22) et peuvent tourner autour de l'arbre d'aube avec un levier de réglage (23) connecté à l'arbre d'aube et agissant sur l'arbre d'aube et entraîné par le biais d'une bague de réglage (4), **caractérisé en ce que** le dispositif directeur comprend, pour le transfert d'une force de réglage de la bague de réglage (4) à l'arbre d'aube (22) un dispositif selon l'une quelconque des revendications 1 à 4.

6. Dispositif directeur selon la revendication 5, **caractérisé en ce que** le boulon d'entraînement (6) est monté à rotation dans des alésages (41) de la bague de réglage (4).

7. Compresseur comprenant un diffuseur avec des aubes de diffuseur réglables, **caractérisé en ce que** le diffuseur comprend un dispositif directeur selon l'une quelconque des revendications 5 ou 6.

8. Turbine à gaz d'échappement, **caractérisée par** un dispositif directeur selon l'une quelconque des revendications 5 ou 6.

9. Turbocompresseur à gaz d'échappement, **caractérisé par** un compresseur selon la revendication 7 et/ou par une turbine à gaz d'échappement selon la revendication 8.
